# FASCICULE DE BREVET EUROPEEN

(11) **EP 0 967 830 B1**
(45) Date de publication et mention de la délivrance du brevet: **09.04.2008**
(21) Numéro de dépôt: 99401568.3
(22) Date de dépôt: 24.06.1999
(51) Int. Cl.: H04Q 11/04, H04Q 3/00

(54) **Signalling data transmission method**
Procédé de transmission de données de signalisation
Verfahren zur Übertragung von Signalisierungsdaten

(30) Priorité: 25.06.1998 FR 9808065
(43) Date de publication de la demande: 29.12.1999
(73) Titulaire: Alcatel Lucent, 75008 Paris (FR)
(72) Inventeur: Laroque, Christian, 92500 Rueil Malmaison (FR); Bennai, Lahcen, 92700 Colombes (FR)
(74) Mandataire: Sciaux, Edmond

(56) Documents cités:
- EP-A- 0 769 882
- EP-A- 0 857 004
- WO-A-99/05590
- CA-A- 2 221 218
- US-A- 5 594 732

## Description

La présente invention a pour objet un procédé de transmission de données de signalisation. Elle est particulièrement utilisable dans le domaine de la téléphonie pour relier entre eux des autocommutateurs, notamment des autocommutateurs privés.

Dans le domaine de la téléphonie on connaît la constitution de canaux de transmission comportant, dans leur principe, la réservation physique, temporelle, ou fonctionnelle de moyens pour envoyer des données et la réservation physique, temporelle ou fonctionnelle de moyens complémentaires pour envoyer des signaux de signalisation. Les signaux de signalisation, ou la signalisation de manière générale, permettent d'organiser le transfert des données sur les autres moyens. Des canaux de donnés ou de signalisation peuvent ainsi être des canaux physiquement différenciés, des paires de fils téléphoniques dans un câble multi-paires. Ils peuvent être également des allocations en fréquence dans une bande globale de fréquence. Ils peuvent enfin, sur le plan fonctionnel, être des messages envoyés sur un canal mais dont le destinataire est tantôt une personne, tantôt une autre en fonction de données de signalisation contenues dans le message.

On a coutume par ailleurs de distinguer les accès homogènes et les accès hybrides. Les accès homogènes sont ceux dans lesquels des canaux utilisés pour les données sont du même type que des canaux utilisés pour l'envoi de la signalisation. Dans l'invention on s'orientera plus particulièrement vers les accès hybrides pour lesquels les types de canaux sont différents, bien que l'invention soit également adaptable aux accès homogènes.

Lorsque deux autocommutateurs sont reliés entre eux, il est nécessaire que ces autocommutateurs pratiquent dans leurs canaux de communications communs des protocoles de transaction identiques. Dans ce but la norme RNIS relative aux Réseaux Numérisés à Intégration de Service (RNIS) a permis une définition d'un protocole qui est assez performant. En conséquence, depuis l'érection de cette norme, les nouveaux autocommutateurs construits y sont conformes.

Cependant, dans les réseaux notamment publics existants, certains canaux de communication ne sont pas conformes à cette norme. Ils ne le sont pas parce qu'ils ont été conçus il y a longtemps, parce que leurs objectifs sont de natures différentes de celle de la norme, ou parce que leurs modes d'utilisation sont alors plus efficaces. On connaît ainsi à titre d'exemple les réseaux de type ethernet ainsi que les réseaux de type QSig-GF.

De tels procédés sont par exemple divulgués dans les documents US-A-5 594 732 et CA-A-2 221 218.

Un problème se pose alors du fait de cette hétérogénéité des équipements, les autocommutateurs à la norme RNIS d'une part et des réseaux qui ne la respectent pas d'autre part. Ce problème se situe dans le fait que dans la norme RNIS il a été défini un protocole pour envoyer les signaux de signalisation relatifs à des communications téléphoniques à établir ou à modifier. En pratique c'est la définition de ce protocole qui pose problème. Il ne peut pas être mis en oeuvre dans les réseaux qui ne sont pas à la norme RNIS. Dans le cadre de ce protocole, il est prévu des messages SAPI S (Service Access Point Identifier) pour la signalisation, et SAPI P pour l'envoi des paquets. Lorsqu'on réalise les équipements d'un autocommutateur, on est donc confronté à la difficulté de l'inaptitude de cet autocommutateur à acheminer des communications selon son protocole normalisé sur un réseau de type différent de la norme et qui en particulier n'accepte pas les messages de signalisation.

Dans l'invention on résout ce problème en transformant les données de signalisation élaborées par l'autocommutateur au format de la norme RNIS en des données de signalisation en un format accepté par le canal. Le format accepté par le canal comporte par ailleurs l'adjonction à ces données de signalisation d'une information selon laquelle elles sont des données de signalisation. En effet le canal qui va être utilisé ne faisant pas la distinction, on lui indiquera, selon un protocole déterminé à l'avance dans l'invention, qu'il s'agit de messages de signalisation.

Plus concrètement, compte tenu du caractère aléatoire du besoin d'envoi des messages de signalisation (ces messages de signalisation ne sont en effet envoyés qu'au moment de l'établissement d'une communication entre deux interlocuteurs, ou au moment de la modification des conditions de cette communication), il apparaît nécessaire de disposer d'une voie ouverte en permanence pour acheminer les messages de signalisation. Mais une voie ouverte en permanence est consommatrice de ressource, notamment si elle véhicule peu d'informations. Or, un canal ouvert en permanence bien connu est un réseau ethernet. Un réseau ethernet est prévu pour acheminer les paquets d'informations qui lui sont apportés. Cependant ce réseau, tout en correspondant efficacement aux souhaits présentés, de ce point de vue de disponibilité permanente, par les propriétaires d'autocommutateurs, ne répond pas à la norme RNIS. En effet, dans le traitement d'encapsulation des données pour les transporter dans les réseaux ethernet, on utilise des logiciels répondant par exemple à une norme dite UDP-IP pour User Datagram Protocol - Internet Protocol. Cette norme UDP - IP n'est pas structurée comme la norme RNIS, elle n'est pas compatible avec elle. En particulier avec la norme UDP - IP l'envoi de paquets d'information n'est d'une part pas assuré et d'autre part leur ordre d'arrivée est encore moins assuré.

Dans l'invention, pour résoudre ce problème, on prévoira alors en plus d'adjoindre aux paquets de signalisation envoyés par un réseau ethernet une information représentative du rang du paquet. En réception lorsqu'un paquet est reçu, on envoie à l'émetteur un accusé de réception. Cet accusé de réception identifie le rang du dernier paquet reçu. Ce faisant l'émetteur sait quels sont les paquets d'informations qui n'ont pas été reçu et qu'il faut re-émettre.

Dans un autre exemple, le canal utilisé pour envoyer les messages de signalisation, et qui n'est pas non plus conforme à la norme RNIS, sera un canal à la norme QSIG -GF. Par rapport au réseau ethernet qui ne possédait pas du tout de canal de signalisation, les réseaux selon la norme QSig-GF comportent des canaux de signalisation. Cependant ces canaux de signalisation ne sont capables que de véhiculer des messages de SAPI S, et non pas des messages de SAPI P. En conséquence, toutes les informations de type SAPI P élaborées par les autocommutateurs dans le cadre de communications de type RNIS ne peuvent pas être acheminées.

Dans ce cas, dans l'invention, on va se servir de l'existence, dans ce protocole de type QSig-GF de l'existence d'une disponibilité particulière dite message de "FACILITY" et qui permet d'envoyer n'importe quel type d'informations, à l'intérieur d'un message de FACILITY, en respectant toutefois une encapsulation spécifique à la norme QSig-GF. Dans l'invention, on établit alors préalablement entre les deux autocommutateurs reliés par une liaison de type QSig-GF une communication sans canal B. Par l'intermédiaire de cette communication sans canal B, il est alors possible aux deux autocommutateurs d'échanger des messages de FACILITY dans le canal D relatif à la communication, et donc d'encapsuler des messages de signalisation avec un en-tête correspondant à la norme QSig-GF.

L'invention a donc pour objet un procédé de transmission de données de signalisation relatives à un accès téléphonique conforme à la norme RNIS, ces données de signalisation étant transmises sur un canal selon une autre norme, non conforme à la norme RNIS, caractérisé en ce qu'il comporte les étapes suivantes :
- on établit une fois pour toutes un canal selon une autre norme non conforme à la norme RNIS,
- on transforme des données de signalisation au format de la norme RNIS en des données en un format accepté par le canal selon l'autre norme,
- on envoie les données de signalisation ainsi transformées,
- à la réception on les transforme réciproquement en des données de signalisation au format de la norme RNIS.

L'invention sera mieux comprise à la lecture de la description qui suit et à l'examen des figures qui l'accompagnent. Celles-ci ne sont données qu'à titre indicatif et nullement limitatif de l'invention. Les figures montrent :
- Figure 1 : la représentation schématique de la mise en oeuvre du procédé de l'invention dans le cas où l'autre norme serait une norme UDP - IP ;
- Figure 2 : la représentation du même type que celle de la figure 1 dans le cas où l'autre norme serait la norme QSig-GF.

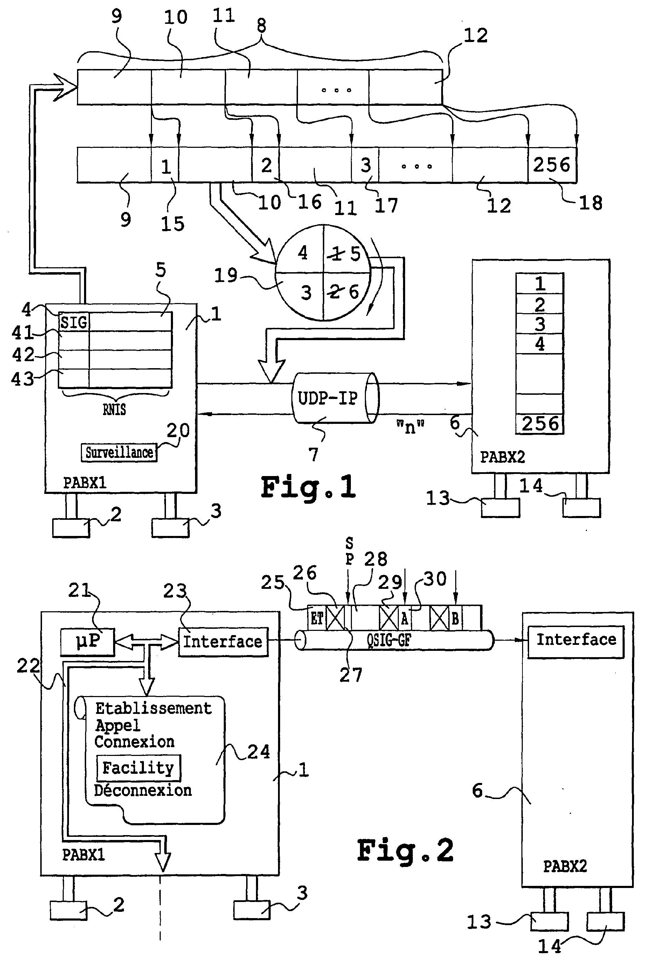

La figure 1 montre un procédé conforme à l'invention. On y distingue un autocommutateur 1, dit PABX 1 pour Private Automatic Branch eXchanger relié à des équipements de téléphonie 2 et 3. Pour simplifier on peut admettre que les équipements 2 et 3 sont des postes téléphoniques ou des micro-ordinateurs. La particularité de la construction des équipements 2 et 3 est qu'elle est conforme à la norme RNIS de même que celle de l'autocommutateur 1. Selon cette norme RNIS on élabore pour toutes liaisons d'un équipement 2 à l'autocommutateur 1 ou à un autre équipement 3, des informations comportant une partie de signalisation 4 et une partie de contenu de message 5. Selon la norme RNIS les parties 4 et 5 sont traitées par des circuits différents. Les circuits qui traitent les informations 4 ont notamment pour objet de mettre en service toutes les commutations nécessaires à l'acheminement des messages entre les équipements 2 et les équipements 3.

Dans l'invention, on veut relier l'autocommutateur 1 à un autre autocommutateur 6 du même type, sachant que la liaison 7 qui permet de relier les deux autocommutateurs est une liaison d'un type différent et fonctionnant selon un protocole différent de celui de la norme RNIS. Dans l'exemple de la figure 1, le protocole de la liaison 7 est un protocole Internet respectant les instructions de type UDP - IP. Plus généralement la liaison comportera des canaux (non représentés) pour transmettre les messages 5 et un canal à la norme UDP - IP pour transmettre la signalisation 4 relative à ces messages 5.

Dans l'invention, on va alors transformer les informations 4 de signalisation qui sont données au format de la norme RNIS en un message 8 de signalisation en un format accepté par le canal 7 selon l'autre norme. Par exemple des messages de signalisation 4, 41, 42, et 43 pourront être encapsulés dans des paquets UDP-IP 9 à 12. Les paquets 9 à 12 sont encapsulés par des bits de contrôle conformes à la norme UDP - IP. Dans la norme UDP-IP, un message est inséré dans un paquet UDP-IP. Il n'y a pas plusieurs messages de signalisation dans un paquet UDP-IP. De plus un message de signalisation n'est pas coupé en plusieurs morceaux. Selon l'invention, on envoie les messages 8 ainsi encapsulés dans le canal 7 et on les reçoit dans l'autocommutateur 6. Dans l'autocommutateur 6 on transforme ces messages 8 reçus en des informations du type 4 conformes à la norme RNIS. Ces informations peuvent alors être exploitées dans l'autocommutateur 6 pour permettre la liaison des équipements 2 et 3 avec d'autres équipements 13 et 14 (éventuellement sur un autre canal).

Etant donné que le protocole UDP - IP présente des risques de perte de paquets et surtout, d'inversion de l'ordre des paquets 9 à 12, on va dans un perfectionnement de l'invention modifier le message 8 formaté selon la norme UDP - IP de façon à lui adjoindre une information de rang. On modifie dans la structure du message 8 la constitution des blocs de données successifs : les blocs 9 à 12. A chaque bloc on ajoute une information de rang. Par exemple cette information de rang est cotée sur un octet, le rang pouvant être compris entre 0 et 255. Le rang est alors incorporé au message 8 dans une zone respectivement 15 à 18 placée avant ou après chaque bloc 9 à 12. Le rang fait partie intégrante de chaque bloc à envoyer. Selon l'invention, dans ce cas, c'est le bloc à envoyer constitué d'un bloc 9 et de son rang 15 qui doit être conforme à la norme UDP - IP. On envoie ensuite ces blocs à envoyer successifs à l'autre autocommutateur 6. Celui-ci les reçoit et renvoie à l'autocommutateur 1 un accusé de réception représentant essentiellement le rang du dernier bloc envoyé reçu et correspondant à une suite continue de paquets envoyés reçus.

Dans un exemple l'envoi est effectué à l'aide d'une mémoire tournante 19 qui, dans un exemple, comporte 4 cases pour charger quatre blocs à envoyer. On charge ainsi le bloc à envoyer de rang 1, le bloc à envoyer de rang 2, le bloc à envoyer de rang 3 et le bloc à envoyer de rang 4. Puis on envoie ces quatre blocs à envoyer, tour à tour, par le canal 7 à l'autocommutateur 6. On peut par ailleurs charger la mémoire 19 au fur et à mesure après l'envoi des blocs à envoyer. L'autocommutateur 6 peut ensuite, compte tenu de conditions qui ont affecté la transmission, constater qu'il a reçu effectivement le bloc envoyé de rang 1, le bloc de rang 2, qu'il n'a pas reçu le bloc de rang 3 mais qu'il a par contre reçu le bloc de rang 4. Dans ce cas, l'autocommutateur 6 envoie un accusé de réception à l'autocommutateur 1 en lui indiquant le rang 2 (n=2). Ceci signifie que les blocs ont été reçus d'une manière continue jusqu'au bloc de rang 2.

Dans ce cas, l'autocommutateur 1 peut charger la mémoire tournante 19 avec un bloc suivant 5 et un autre bloc suivant 6 en lieu et place des blocs 1 et 2 déjà reçus. Le contenu de la mémoire 19 sera alors constitué des blocs 3, 4, 5 et 6. Ainsi, lorsque l'autocommutateur 1 charge la mémoire tournante 19 avec les blocs 5 et 6, seuls ces deux blocs sont envoyés. Après l'envoi du bloc 6, on se retrouve à devoir envoyer à nouveau le bloc 3 si, après une temporisation, aucun accusé de réception supérieur ou égal à 3 n'est reçu. Un bloc à envoyer est réellement envoyé quand ce bloc est présent dans la mémoire tournante et quand ce bloc déjà envoyé n'a pas été acquitté après une temporisation. Donc le bloc 3, et éventuellement le bloc 4 sont envoyés. On remarquera que le bloc 4 pourra être envoyé une deuxième fois bien qu'on ait pu l'avoir déjà reçu lors de son premier envoi, mais parce que sa temporisation peut également arriver à terme avant de recevoir l'accusé de réception, l'acquit, du paquet 3 (ou même du bloc 6 puisque tous ces blocs ont été envoyés). Ainsi de suite, on charge la mémoire tournante 19 et on envoie les blocs au fur et à mesure de la réception des accusés de réception. On prévoit de plus, si aucun accusé de réception n'est reçu, après une temporisation donnée, de re-émettre en totalité le contenu de la mémoire tournante. Ainsi, si aucun autre accusé de réception n'est reçu depuis l'accusé de réception numéro 2, on pourra émettre une seconde fois les blocs 3, 4, 5 et 6.

Il est par ailleurs possible que le bloc 3, qui n'a pas été préalablement reçu en temps utile, arrive en retard dans l'autocommutateur 6, alors que celui-ci a déjà reçu le bloc envoyé 3 lors du second envoi de ce bloc à envoyer. Dans ce cas tout simplement ce bloc envoyé est reçu en double. Il est écarté et n'est pas traité une deuxième fois.

Selon un autre perfectionnement de l'invention, on teste en permanence l'existence fonctionnelle du canal 7 par envoi de message de surveillance. Les messages de surveillance 20 prennent tout simplement la forme d'un bloc de signalisation de rang 1 qu'on envoie avec la périodicité retenue pour le test de la fonctionnalité du canal 7. Par exemple ils peuvent être envoyés toutes les 15 secondes environ. Si l'accusé de réception, 1, qui les concerne est reçu, le canal est réputé fonctionnel. S'il ne l'est pas, au bout d'un certain nombre de tentatives, le canal 7 est déclaré déficient et une procédure d'alerte doit être engagée. Il en est de même si un bloc de rang n prévu n'est jamais reçu.

Etant donné qu'on a affecté qu'un octet pour constituer les rangs, le rang d'un bloc envoyé ne peut pas être supérieur à 255. Ceci n'est pas gênant puisqu'il suffit de recommencer de compter à partir de 0 lorsqu'on a atteint 255 si le nombre de blocs est supérieur à 255. Dans ce cas, on devra seulement faire en sorte que la mémoire tournante comporte un nombre de blocs sensiblement inférieur à 256.

La figure 2 reprend des éléments similaires à ceux de la figure 1 mais adaptés au protocole QSig-GF qui lui non plus n'est pas conforme à la norme RNIS. Dans celle-ci on a en outre un petit peu détaillé le fonctionnement de l'autocommutateur 1. Celui-ci comporte un microprocesseur 21 en liaison par un bus 22 avec les équipements 2-3, avec une interface 23 au format QSig-GF et avec une mémoire programme 24 comportant notamment un programme de formatage des messages au format compréhensible par la norme QSig-GF. Il en était de même pour la figure 1 en ce qui concerne le protocole UDP-IP. Ce programme 24 comporte entre autres, un mode d'utilisation particulier possédant une procédure d'appel, une procédure de connexion, une procédure d'envoi de messages libres dite FACILITY et une procédure de déconnexion. Dans l'invention, on va lancer avec le microprocesseur 21 une session de travail de l'interface 23 pour qu'elle appelle l'autocommutateur 6 en établissant une communication sans canal D, qu'elle se connecte à lui et qu'elle reste connectée. Au besoin on supprimera des temporisations de déconnexion automatique. La communication sans canal B établie est établie par l'intermédiaire de la voie D du faisceau QSig-GF. Elle est appelée communication support. Selon l'invention, l'utilisation des messages FACILITY dans le canal D, se fait par encapsulation de la signalisation de type RNIS (SAPI S et SAPI P) dans les messages FACILITY au travers de cette communication support. Les messages FACILITY sont échangés entre l'autocommutateur 1 et l'autocommutateur 6 d'une manière transparente. Le transfert peut se faire aussi longtemps que cette communication support est active.

Selon ce mode, des messages à envoyer sur le canal au format QSig-GF doivent essentiellement comporter un en-tête 25. En pratique l'en-tête 25 est donné sur un octet. Ce premier octet est un élément d'information facilité (EI FACILITY). Il comporte quatre types d'informations. Un premier type d'informations renseigne sur la longueur du message de facilité.

L'en-tête concerne aussi un discriminateur de protocole, des références de l'appel de la communication support, et le type du message. En fait dans le cas présent, le type du message sera toujours un type de FACILITY.

Dans une zone 26 du message de FACILITY consécutive à la zone d'en-tête 25, on indiquera un entête propre au message. Dans une zone 27 suivante on indiquera (par un code correspondant à S ou P) la nature de SAPI S ou de SAPI P du message. Dans une zone 28 suivante, libre, on enverra les messages de signalisation proprement dits : les informations 4 vues précédemment. Si le message constitué alors selon le protocole QSig-GF est plus long que les 128 octets disponibles dans une trame normale du message de FACILITY (dont on doit par ailleurs déduire les en-têtes et zones 26 et 27), la longueur indiquée dans la partie 25 devra comporter une indication selon laquelle le message de FACILITY se continuera au-delà des 128 octets. Dans ce cas, le message constitué comportera une partie 29, identique à la partie 26, et une partie 30. La partie 30 se substitue à l'indication relative au SAPI S ou au SAPI P. Mais elle comporte en pratique un rang de l'extension de longueur, au-delà de la longueur normale. Dans l'exemple représenté, on a ainsi prévu que la partie 30 pouvait comporter une information de rang A, puis une information de rang B suivant. Ainsi de suite, selon la longueur du message de signalisation à transmettre, d'une part l'information 25 sera prévue en fonction de la longueur, et d'autre part des jalons A, B seront interposés au sein du message.

Les données de signalisation à transmettre seront, dans l'invention, des données de contrôle des flux, des données de sécurité et, essentiellement, des données d'ordonnancement des messages. Selon l'invention, la partie d'information 5 peut être envoyée entre les autocommutateurs 1 et 2 par d'autres canaux, d'une manière connue ou inconnue. Eventuellement les équipements 2 et 3 peuvent être reliés aux équipements 13 et 14 eux aussi par des canaux de type UDP - IP ou des canaux de type QSig-GF. Ces canaux, tout en étant de même type que les canaux qui servent pour la transmission de la signalisation seront cependant différents. On n'envoie ainsi pas en même temps la signalisation et les messages sur un même canal.

## Revendications

1. - Procédé de transmission de données (4) de signalisation relatives à un accès (1-3) téléphonique conforme à la norme RNIS, ces données de signalisation étant transmises sur un canal (7) selon une autre norme non conforme à la norme RNIS, **caractérisé en ce qu'**il comporte les étapes suivantes :
- on établit une fois pour toutes un canal (7) en permanence selon une autre norme non conforme à la norme RNIS,
- on transforme des données de signalisation au format (8) de la norme RNIS en des données en un format accepté par le canal selon l'autre norme,
- on envoie les données de signalisation ainsi transformées,
- à la réception on les transforme réciproquement en des données de signalisation au format de la norme RNIS.

2. - Procédé selon la revendication 1, **caractérisé en ce que**
- le canal non conforme est selon la norme ethernet UDP-IP, et **en ce que**
- on formate les données de signalisation à transmettre en blocs (9-12) successifs de données,
- on constitue des blocs à envoyer avec ces blocs de données de signalisation successifs en leur ajoutant une information (15-18) de rang du bloc dans la succession,
- on envoie les blocs à envoyer à partir d'un appareil (1) connecté à une extrémité du canal,
- on reçoit les blocs à envoyer dans un autre appareil (6) connecté à une autre extrémité du canal,
- on teste dans cet autre appareil les blocs à envoyer reçus, et
- on fait envoyer par cet autre appareil un signal (n) d'accusé de réception désignant le bloc à envoyer de rang le plus élevé reçu et appartenant à une suite continue de rang de blocs à envoyer.

3. - Procédé selon l'une des revendications 1 à 2, **caractérisé en ce que**
- on envoie périodiquement des signaux de surveillance (20) sur le canal de selon cette autre norme, et
- on teste le bon fonctionnement de ce canal selon cette autre norme.

4. - Procédé selon la revendication 1, **caractérisé en ce que**
- le canal non conforme fonctionne selon la norme Qsig-GF, et **en ce que**
- on établit une liaison conforme à cette norme,
- on configure cette liaison selon un mode dit FACILITY de cette norme,
- et on formate (25-30) les données de signalisation à transmettre en occupant des segments libres de messages élaborés selon le mode FACILITY de cette autre norme QSig-GF.

5. - Procédé selon l'une des revendications 1 à 4, **caractérisé en ce que**
- les données de signalisation sont des données de contrôle de flux, de sécurité, et d'ordonnancement de messages.

6. - Procédé selon l'une des revendications 1 à 5, **caractérisé en ce qu'**on envoie des messages de données sur un autre canal que ce canal de signalisation de type non conforme à la norme RNIS.

## Claims

1. A method of transmitting signaling data (4) which relates to telephone access (1-3) conforming to the ISDN standard and is transmitted on a channel (7) that conforms to another standard and does not conform to the ISDN standard, which method is **characterized in that** it includes the following steps:
- a channel (7) is set up permanently once and for all that conforms to another standard and does not conform to the ISDN standard,
- signaling data in the format (8) of the ISDN standard is converted into data in a format accepted by the channel conforming to the other standard,
- the signaling data converted in this way is sent, and
- when it is received, the signaling data is converted reciprocally into signaling data to the ISDN standard format.

2. A method according to claim 1, **characterized in that**:
- the channel that does not conform to the ISDN standard conforms to the UDP-IP Ethernet standard,
- the signaling data to be transmitted is formatted into successive data blocks (9-12),
- send blocks are constructed from said successive signaling data blocks by adding to them information (15-18) on the order of the blocks,
- the send blocks are sent from a unit (1) connected to one end of the channel,
- the send blocks are received in another unit (6) connected to the other end of the channel,
- send blocks that have been received are tested in said other unit, and
- said other unit sends an acknowledgment signal (n) designating the highest numbered send block that has been received and belongs to a continuous series of send blocks.

3. A method according to either claim 1 or claim 2, **characterized in that**:
- surveillance signals (20) are sent periodically on the channel conforming to said other standard, and
- correct operation of said channel conforming to said other standard is tested.

4. A method according to claim 1, **characterized in that**:
- the channel that does not conform to the ISDN standard conforms to the QSig-GF standard, and **in that**:
- a link is established that conforms to the QSig-GF standard,
- said link is configured in a FACILITY mode of that standard, and
- the signaling data to be transmitted is formatted (25-30) to occupy free segments of messages generated in accordance with the FACILITY mode of said QSig-GF standard.

5. A method according to any one of claims 1 to 4, **characterized in that** the signaling data comprises flow control data, security data and message scheduling data.

6. A method according to any one of claims 1 to 5, **characterized in that** data messages are sent on a channel other than said signaling channel of a type that does not conform to the ISDN standard.

## Patentansprüche

1. Verfahren zur Übertragung von Signalisierungsdaten (4) in Bezug auf einen telefonischen Zugriff (1-3) gemäß der Norm ISDN, wobei diese Signalisierungsdaten gemäß einer anderen Norm, die nicht der Norm ISDN entspricht, über einen Kanal (7) übertragen werden, **dadurch gekennzeichnet, dass** es die folgenden Schritte umfasst:
- es wird einmal ein dauerhaft bestehender Kanal (7) gemäß einer anderen Norm erstellt, die nicht der Norm ISDN entspricht,
- die Signalisierungsdaten werden von dem Format (8) der Norm ISDN in Daten eines anderen Formats umgewandelt, die von dem Kanal akzeptiert werden, der der anderen Norm entspricht,
- die auf diese Weise umgewandelten Signalisierungsdaten werden übertragen,
- beim Empfang werden diese wieder in Signalisierungsdaten im Format der Norm ISDN umgewandelt.

2. Verfahren gemäß Anspruch 1, **dadurch gekennzeichnet, dass**
- der nicht konforme Kanal der Norm Ethernet UDP-IP entspricht, sowie dadurch, dass
- die zu übertragenden Signalisierungsdaten in Form von aufeinander folgenden Datenblöcken (9-12) formatiert werden,
- die zu übertragenden Blöcke aus aufeinander folgenden Blöcken mit Signalisierungsdaten zusammengestellt werden, indem ihnen eine Information (15-18) über den Stellenwert des Blocks in der Reihenfolge hinzugefügt wird,
- die zu übertragenden Blöcke von einem Gerät (1) übertragen werden, das mit einem Ende des Kanals verbunden ist,
- die zu übertragenden Blöcke von einem anderen Gerät (6) empfangen werden, das mit dem anderen Ende des Kanals verbunden ist,
- die zu übertragenden empfangenen Blöcke in diesem anderen Gerät geprüft werden, und
- von diesem anderen Gerät ein Signal (n) zur Empfangsbestätigung gesendet wird, in dem der zu übertragende Block mit dem höchsten empfangenen Stellenwert bezeichnet ist, der zu einer durchgehenden Reihenfolge von Stellenwerten für zu übertragende Blöcke gehört.

3. Verfahren gemäß einem der Ansprüche 1 bis 2, **dadurch gekennzeichnet, dass**
- regelmäßig Überwachungssignale (20) über den Kanal gemäß dieser anderen Norm übertragen werden, und
- die einwandfreie Funktionsweise dieses Kanals gemäß dieser anderen Norm geprüft wird.

4. Verfahren gemäß Anspruch 1, **dadurch gekennzeichnet, dass**
- der nicht konforme Kanal gemäß der Norm QSig-GF funktioniert, sowie dadurch**,** dass
- eine Verbindung gemäß dieser Norm hergestellt wird,
- diese Verbindung entsprechend einem so genannten FACILITY-Modus gemäß dieser Norm konfiguriert wird,
- und die zu übertragenden Signalisierungsdaten (25-30) formatiert werden, indem sie freie Abschnitte von Meldungen belegen, die entsprechend dem FACILITY-Modus dieser anderen Norm QSig-GF erstellt wurden.

5. Verfahren gemäß einem der Ansprüche 1 bis 4, **dadurch gekennzeichnet, dass**
- es sich bei den Signalisierungsdaten um Daten für die Datenstromkontrolle, die Sicherheit und die Steuerung der Meldungsreihenfolge handelt.

6. Verfahren gemäß einem der Ansprüche 1 bis 5, **dadurch gekennzeichnet, dass** Datenmeldungen über einen anderen Kanal als diesen Signalisierungskanal übertragen werden, der nicht dem Typ der Norm ISDN entspricht.
